# EUROPEAN PATENT APPLICATION

(11) **EP 4 678 555 A1**
(43) Date of publication of application: **14.01.2026**
(21) Application number: 24188476.6
(22) Date of filing: 12.07.2024
(51) Int. Cl.: B65D 35/02, G03H 1/02, B32B 38/06, B65B 1/00, B31C 5/00

(54) **TUBE COMPRISING A MICRO EMBOSSED METALLIC FOIL AND METHODS FOR MANUFACTURING SAID TUBE**

(71) Applicant: ALBEA SERVICES, 92400 Courbevoie (FR)
(72) Inventor: MUROWANSKI, Krzysztof, 92230 GENNEVILLIERS (FR)
(74) Representative: Gevers & Orès

(57) **Abstract**

Tube (10) comprising a tube head (12) and a tube sleeve (14) extending along a main axis (A), the tube sleeve (14) comprising:
- a substrate layer (24), and
- a metallic foil (26) comprising a metallic layer (26A) arranged at least locally on an external face of the substrate layer (24) and forming locally the most external layer of the sleeve (14);
wherein the metallic foil (26) is engraved by a micro embossed pattern (30) which presents a depth less than 20 µm.

## Description

The invention relates a tube comprising a tube head and a tube sleeve extending along a main axis, the tube sleeve comprising:
- a substrate layer, and
- a metallic foil arranged locally on coated / varnished sleeve of the tube

Packaging of consumer items is important in attracting the attention of a potential consumer such that the consumer will consider purchasing the product. Low-quality packaging often suggests that the product itself is of poor quality. Conversely, packaging that is attractive and appears to be of high quality will often convey to the potential consumer that the product within is also of high quality.

For some products such as toothpaste, various food items, lotions, etc., the packaging may be in the form of a flexible tube that stores the product until use. The look and feel of the tube are important in either attracting a potential customer to consider the item for purchase, or in retaining the customer for subsequent sales and word-of-mouth advertising.

Prior art decoration was made by printing the web forming the sleeve of the tube. However, this solution has been known for a long time and it is used on every tube designs. Therefore, it does not convey a high-quality feel anymore.

It is also known to stick flat labels of paper and/or plastic over the sleeve. However, a user can feel the thickness of these labels by touching the tube. Moreover, such a label runs the risk of coming unstick. Therefore, it does not convey a high-quality feel. Moreover, the use of such labels pollutes the recycling stream if it is not separated at disposal.

To obtain more attracting effect, it also known to use metallized substrate or to apply metallic or holographic film on top of the standard and not metalized substrates with cold foil or hot foil technology sleeve. However, all these decorations cannot be used to display specific information or patterns that switch from one to another

There is a need to find a way to decorate the tube in a very attractive and recognizable way.

The invention propose a tube comprising a tube head and a tube sleeve extending along a main axis, the tube sleeve comprising:
- a substrate layer, and
- a metallic foil comprising a metallic layer arranged at least locally on an external face of the substrate layer and forming locally the most external layer of the sleeve;
wherein the metallic foil is engraved by a micro embossed pattern which presents a depth less than 20 µm.

According to another feature of the tube according to the invention, the metallic foil comprises a tie layer is interposed between the metallic layer and the substrate layer.

According to another feature of the tube according to the invention, the metallic foil is glued on the substrate layer.

According to another feature of the tube according to the invention, the micro embossed pattern comprises several interlaced images, each of which is apparent from different viewing angles.

According to another feature of the tube according to the invention, the sleeve is made by rolling a sheet into a tube formed by welding opposite sides.

According to another feature of the tube according to the invention, the substrate layer is a laminate comprising at least one paper layer.

According to another feature of the tube according to the invention, the sleeve is formed by an extruded tube of plastic material such as polyethylene.

The invention also concerns a method for manufacturing a tube according to the invention, in which the metallic foil is micro embossed by pressing a micro engraved die on the flat sheet before the sheet is conformed into a tube.

According to another feature of the method according to the invention, the metallic foil is micro embossed when the sleeve is conformed in a tube by rolling the tubular sleeve over a micro engraved die.

According to another feature of the method according to the invention, the metallic foil is glued on the substrate layer simultaneously with the micro embossing operation, the metallic foil being pressed against the tie layer by the micro embossed die.

The invention will be better understood thanks to the following description which is only indicative and which is not intended to limit said invention, accompanied with the following figures:
- the figure 1 is a perspective view of a tube comprising a micro embossed metallic foil according to the teaching of the invention;
- the figure 2 is a cross-sectional view of the tube of figure 1 taken at the level of the micro embossed metallic foil;
- the figure 3 shows the metallic foil of the tube of figure 1 viewed from a first viewing angle;
- the figure 4 shows the same metallic foil of figure 3 viewed from a second viewing angle;
- the figure 5 is a schematic view showing the process of micro embossment of the metallic foil on a flat sheet of web;
- the figure 6 is a schematic view showing the process of micro embossment of the metallic foil on a tubular sheet of web;
- the figure 7 is a cross-sectional view of the web used to form the sleeve of the tube of figure 1 according to a first example;
- the figure 8 is a cross-sectional view of the web used to form the sleeve of the tube of figure 1 according to a second example.

In the context of the invention, the axial orientation is defined in the direction of the main axis "A" of the tube directed from bottom. A radial orientation extends from inside, near the main axis "A", toward outside in every direction orthogonally from said main axis "A".

The term "container" is used herein to refer to an item which may contain a product. Such products are usually liquids, gels or pastes. Preferred containers include tubes and pouches. The container may further comprise a lid or a cap and, if necessary, attachment means for the lid or cap (such as a tube head or shoulder) before it forms a useful commercial container. As a consequence, the laminated material can form a tube sleeve, an insert of a tube head or a combination thereof.

The term "flexible laminate" as used herein describes a laminate or a container made thereof which can bend or be bent easily and which does not break (unless it is bent too much). Herein in connection with the containers the term flexible indicates that if the container is subjected to a force, for example, by being filled with a liquid, or by applying pressure with a finger or a hand, it will change its form without breaking. A flexible container can also be considered to be a "squeezable" container.

The term "polymer" refers to a large molecule, or macromolecule, composed of many repeated subunits.

The term "PE" refers to polyethylene.

The term "paper layer" refers to a layer comprising cellulose fibers. It includes bleach or unbleached paper. It also includes barrier coated paper. It is preferably a bleached paper which is easier and quicker to recycle.

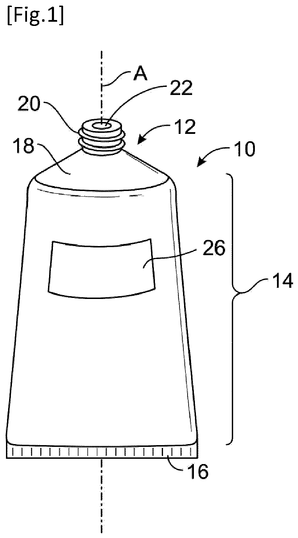

Figures 1 shows a tube 10 extending along a main axis "A". The tube 10 comprises a tube head 12 and a tube sleeve 14.

The tube 10 is intended to contain a product such as liquids, gels or pastes. Advantageously, the tube 10 is intended to contain a cosmetic product.

The sleeve 14 is made by a cylinder of a sheet 15 of extruded or laminated material. An upper end of the sleeve 14 is tightly secured to the tube head 12. A lower end 16 of the sleeve 14 is tightly closed, for instance by welding, to enclose the content of the tube 10.

As represented at figure 1, the tube head 12 may comprise a shoulder 18 and a neck 20.

The neck 20 extends axially upward from the middle of the shoulder 18, along the main axis "A". The neck 20 is here made of plastic material. For instance, the plastic material is PE.

The neck 20 presents a distribution hole 22 from which the content of the tube 10 is intended to be distributed.

The distribution hole 22 can be closed by a cap (nor shown).

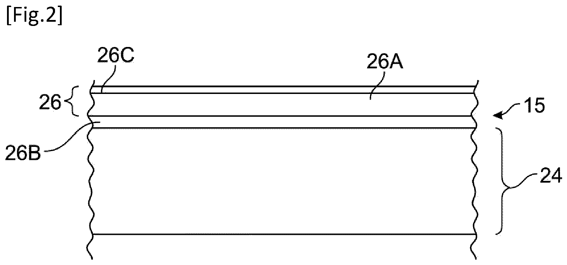

As illustrated at figure 2, the sheet 15 forming the sleeve 14 here comprises one substrate layer 24.

To decorate the sleeve 14, a metallic foil 26 arranged at least locally on an external face of the substrate layer 24. This metallic foil 26 forms the most external layer of the sheet 15 forming the sleeve 14 where it is arranged. Therefore, the metallic foil 26 is generally a devoid of varnish layer or of any film added on its external surface after it has been embossed.

The metallic foil 26 is a multilayer web comprising a metallic layer 26A, a tie layer26B. It may also comprise a transparent coat 26C, such as a lacquer layer. The transparent coat may be colored to provide a colored metallic effect.

The metallic foil 26 is intended to be hot pressed on the substrate layer 24 of the sleeve 14.

As already known, the metallic foil 26 is provided on a carrier web 28 on which it is retained by a release layer (not shown). During the hot pressing, the release layer is melted so that the carrier layer 28 is detached from the metallic foil 26 which is transferred to the substrate layer 24 thanks to the tie layer 26B.

The metallic foil 26 presents a thickness less than 20 µm, preferably less than 15 µm, and more preferably less than 12 µm. The thickness of the metallic foil 26 is for instance more than 7,5 µm.

The metallic layer 26A is made of a metallic material such as aluminum, copper, gold or the like, or a combination of these materials.

The metallic foil 26 here covers only partially the external face of the substrate layer 24. It may represent various shapes and sizes, for instance rectangular, or rounded or oval shapes.

The metallic foil 26 is glued to the substrate material by the tie layer 26B which is interposed between the metallic layer 26A and the substrate layer 24. To obtain a strong bond between the metallic foil 26 and the substrate material, the metallic foil 26 is pressed against the substrate layer 24.26B.

To provide a good bonding, the tie layer is heated during the hot pressing operation. The heat also melts the release layer.

When the metallic foil is pressed, metallic particles are transferred to the substrate layer under the heat and pressure.

The metallic foil 26 presents a micro-embossing pattern 30. Such a micro-embossing pattern 30 presents embossment of very small dimension. An embossment presents for instance a depth, orthogonally to the plane of the foil 26, less than 20 µm, for instance between 10 µm and 15 µm (micrometers). Each micro embossment also presents a very small dimension in the plane of the foil 26. For instance, each embossment presents a width comprised between 1 µm and 100 µm. The length of the embossment can be comprised between 1 µm and several millimeters. -

The micro embossed pattern 30 comprises several interlaced images 32A, 32B, each of which is apparent from different viewing angles.

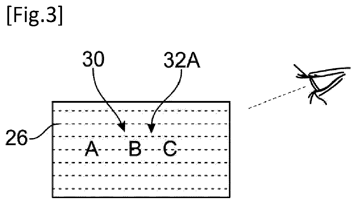

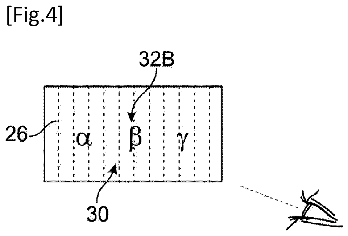

Figures 3 and 4 show an example of the same metallic foil 26 micro-embossed with the same pattern 30 shown from two different viewing angles. This micro-embossed pattern 30 comprises here two images. On the figure 3, the first image 32A show the letters "ABC" which could be replaced by the brand of the cosmetic product. On the figure 4, the second image 32B show the letters "αβγ" which could be replaced by the name of the cosmetic product.

For instance, the micro embossed pattern 30 comprises multiple interlaced images which are slice into very fine strips, similar to the method used for lenticular printing, however, the images are here created without lenticular lenses. Each strip from different images must be precisely positioned in the pattern 30.

The embossed surface can be designed to manipulate light through diffraction, refraction, or reflection. It is possible to create structural colors and optical effects that show different images from different viewing angles.

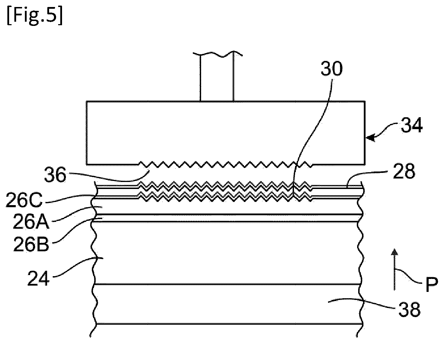

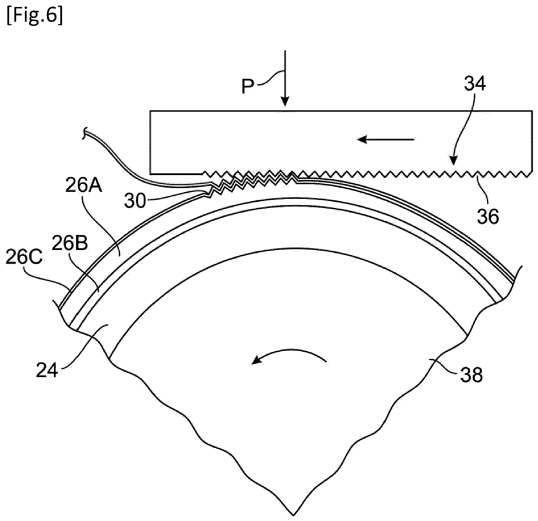

As shown on figures 5 and 6, the metallic foil 26 is micro embossed by pressing the metallic foil 26 against an engraved die 34 when the metallic foil 26 is already arranged on the substrate layer 24. The die 34 is engraved with a master pattern 36 mirroring the micro-embossed pattern 30 on its face which is pressed against the metallic foil 26. The die 34 is for instance engraved by laser ablation or by electron beam lithography.

During this operation, the substrate is supported by a counter die 38.

Advantageously, the metallic foil 26 is glued on the substrate layer 24 simultaneously with the micro embossing operation. The metallic foil 26 is pressed for the first time against the tie layer 26B and the substrate layer 24 by the micro embossed die 34 during the micro embossing operation. This allows the metallic foil 26 to strongly and definitely adhere to the tie layer 26B. In this case, the embossing occurs through the carrier layer 28 and the release layer.

As an example, a pressure of around 19000 kg/m² is applied by the die 34.

In this case, the die 34 and/or the counter die 38 is heated to transfer heat to the tie layer 26B in order to obtain a good bonding.

When the micro embossing operation occurs on a flat substrate layer 24, as will be explained in the first embodiment, the temperature is for instance set between 100°C and 130°C.

When the micro embossing occurs on a substrate layer 24 already configured as a sleeve 14, the temperature is for instance set between 135°C and 210°C.

According to a first embodiment of the invention, the sleeve 14 is made from a sheet 15 comprising the substrate layer 24. This sheet is rolled into a tube formed by welding opposite sides of the sheet 15.

The substrate layer 24 of the sheet 15 is here made of a laminated material.

The substrate layer 24 here comprises a varnished or coated layer 43 on its external face.

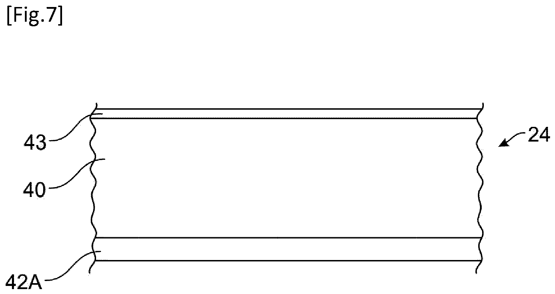

As an example, showed in figure 7, the substrate layer 24 here comprises one paper layer 40.

The substrate layer 24 can also comprise at least a polymeric layer 42. The polymeric layers 42 can comprise any polymer suitable for their use in the field of cosmetic packaging such as PE. Advantageously, the polymeric layers 42 all comprise PE. More advantageously, the polymeric layers 42 are made of PE, especially LDPE (low density polyethylene). In the example illustrated by figure 7, an internal polymeric layer 42A is arranged under said paper layer 40, The internal polymeric layer 42A is the first layer starting from the interior of the tubular sleeve 14 when the sheet 15 is rolled.

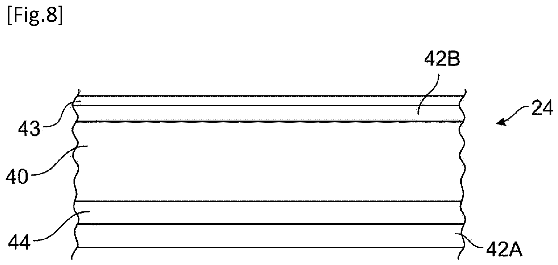

As represented at figure 8, an external polymeric layer 42B can also be arranged above said paper layer 40.

As illustrated on figure 8, the substrate layer 24 can also comprise at least one barrier layer 44. The barrier layer 40 can comprise any material suitable for their use in the field of cosmetic packaging. Advantageously, the barrier layer 44 comprise aluminum. More advantageously, the barrier layer 44 comprise ethylene vinyl alcohol (EVOH). As a variant, the barrier layer can be made of other oxygen and/or water barrier materials such as polyvinyl alcohol (PVOH), silicon dioxide (SiOx), aluminum oxide (AlOx), micro cellulose coating, etc.

Advantageously, the substrate layer 24 may comprises adhesive layers (not shown), especially to establish contact between the barrier layer 44 and a neighboring layer. The adhesive layer can comprise any adhesive suitable for this use, such as EAA (Ethylene Acrylic Acid).

Advantageously, the cellulosic fibers represent at least 60% in mass of the sheet 15. More advantageously, the cellulosic fibers represent at least 70%, preferably at least 80%, in mass of the sheet 15. Such a ratio of paper in the sheet 15 allows a good recyclability of said sheet 15.

Preferably, the paper layer 40 has a thickness comprised between 100 and 400 µm. Preferably, the total thickness of the sheet 15 is comprised between 300 and 450µm. This range of thickness allows good mechanical properties for a sheet 15 comprising around 84% of cellulosic fibers in mass.

Advantageously, the total thickness of the paper layer 40 represent more than 50% of the total thickness of the sheet 15. More advantageously, the total thickness of the paper layer 40 represent more than 70% of the total thickness of the sheet 15. Such a ratio of paper in the sheet 15 allows a good recyclability of said sheet 15 while keeping good mechanical properties.

For this embodiment, the sleeve 14 can be manufactured according to the following method. The metallic foil 26 is glued on the flat sheet 15. The metallic foil 26 is micro embossed by pressing the flat sheet 15 on the engraved die 34 before the sheet 15 is conformed into a tube, as shown on figure 5.

As a variant not represented, the engraved die might be pressed on the flat sheet.

The sheet 15 thus equipped with the metallic foil 26 is then sandwiched between the engraved die 34 and the counter die 38 formed by a flat plate. Precise pressure P is applied. The pressure P forces the metallic foil 26 to conform to the intricate details of the master pattern 36 etched on the die 34, creating a mirrored micro-embossed pattern 30 of raised features on the metallic foil 26 surface. This process allows for high-resolution, permanent patterning on the metallic foil 26.

Simultaneously, the pressure P forces the tie layer 26B against the substrate layer 24 to achieve the gluing of the metallic foil 26 on the substrate layer 24.

After this step, the sheet 15 is rolled to form a tube as previously explained.

According to a second embodiment of the invention, shown at figure 6, the metallic foil 26 is micro embossed on the sheet 15 when it is already conformed in a tube to form a sleeve 14. In this embodiment, the tubular sleeve 14 is mounted on a counter die 38 formed by a rolling cylinder. Only an angular section of the cylinder is here represented. The tubular sleeve 14 is rolled over a micro engraved die 34 which is pressed against the counter die 38. The micro engraved die 34 is here flat, but it could form by another cylinder. Precise pressure "P" is applied. The pressure P forces the metallic foil 26 to conform to the intricate details of the master pattern 36 etched on the die 34, creating a mirrored micro embossed pattern 30 of raised features on the metallic foil 26 external surface. This process allows for high-resolution, permanent patterning on the foil 26.

Simultaneously, the pressure P forces the tie layer 26B against the substrate layer 24 to achieve the gluing of the metallic foil 26 on the substrate layer 24.

This process is particularly fitted to be applied to a sleeve 14 formed by an extruded tube of plastic material such as polyethylene.

However, this process can also be applied to a sheet 15 which has already been rolled into a tube and welded to form the sleeve 14.

## Claims

1. Tube (10) comprising a tube head (12) and a tube sleeve (14) extending along a main axis (A), the tube sleeve (14) comprising:
- a substrate layer (24), and
- a metallic foil (26) comprising a metallic layer (26A) arranged at least locally on an external face of the substrate layer (24) and forming locally the most external layer of the sleeve (14);
wherein the metallic foil (26) is engraved by a micro embossed pattern (30) which presents a depth less than 20 µm.

2. Tube (10) according to the previous claim wherein the metallic foil (26) comprises a tie layer (26B) is interposed between the metallic layer (26A) and the substrate layer (24).

3. Tube (10) according to any one of the previous claims in which the metallic foil (26) is glued on the substrate layer (24).

4. Tube (10) according to any one of the previous claims in which the micro embossed pattern (30) comprises several interlaced images (32A, 32B), each of which is apparent from different viewing angles.

5. Tube (10) according to any one of the previous claims in which the sleeve (14) is made by rolling a sheet (15) into a tube formed by welding opposite sides.

6. Tube (10) according to the previous claims in which the substrate layer (24) is a laminate comprising at least one paper layer (40).

7. Tube (10) according to any one of the claims 1 to 4 in which the sleeve is formed by an extruded tube of plastic material such as polyethylene.

8. Method for manufacturing a tube (10) according to claim 5 or 6, in which the metallic foil (26) is micro embossed by pressing a micro engraved die (34) on the flat sheet (15) before the sheet (15) is conformed into a tube.

9. Method for manufacturing a tube according to any of the claims 5 to 7 in which the metallic foil (26) is micro embossed when the sleeve (14) is conformed in a tube by rolling the tubular sleeve (14) over a micro engraved die (34).

10. Method according to any one of the claims 8 or 9 in which the metallic foil (24) is glued on the substrate layer (24) simultaneously with the micro embossing operation, the metallic foil (26) being pressed against the tie layer (26B) by the micro embossed die (34).
